# DEMANDE DE BREVET EUROPEEN

(11) **EP 3 725 432 A1**
(43) Date de publication de la demande: **21.10.2020**
(21) Numéro de dépôt: 20169300.9
(22) Date de dépôt: 14.04.2020
(51) Int. Cl.: B22F 1/00, B23K 35/02, B22F 3/03, B22F 7/06, B22F 3/10, B23K 35/30, B22F 3/02

(54) **PROCÉDÉ ET DISPOSITIF DE FABRICATION DE PRÉFORMES DESTINÉES À LA BRASURE DE COMPOSANTS ÉLECTRONIQUES, PHOTONIQUES THERMIQUES OU MÉCANIQUES**

(30) Priorité: 18.04.2019 FR 1904144
(71) Demandeur: ISP System, 65501 Vic-en-Bigorre Cedex (FR)
(72) Inventeur: Sauvageot, Paul, 65501 Vic en Bigorre (FR); Garcia, Thierry, 65501 Vic en Bigorre (FR)
(74) Mandataire: Célanie, Christian

(57) **Abrégé**

L'invention concerne un procédé de prétraitement d'une composition de brasage comprenant des particules métalliques présentant une granulométrie de l'ordre du micromètre ou du nanomètre, un ou plusieurs liants et un ou plusieurs solvants, ledit procédé comprenant :
- une étape de désolvatation de la composition de brasage (8), de façon à obtenir une composition de brasage désolvatée (11),
- puis une étape de compactage de la composition de brasage désolvatée (11) de façon à obtenir une préforme (3) de particules métalliques, ladite préforme étant apte à être utilisée pour le frittage d'un composant électronique, photonique, thermique ou mécanique sur un substrat,
la composition de brasage (11) étant représentée soit par une pâte à braser, soit par une suspension de grains métalliques ou d'oxalate métallique en suspension dans un solvant.

L'invention concerne également un dispositif pour la mise en œuvre du procédé.

## Description

### DOMAINE DE L'INVENTION

Le secteur technique de la présente invention concerne les procédés de frittage de composants électroniques et plus précisément les procédés et dispositifs de prétraitement de compositions pour frittage.

### ETAT DE LA TECHNIQUE

De nos jours, la quasi-totalité des composants électroniques par exemple est fixée sur un substrat par une ou plusieurs brasures. Cette brasure peut être obtenue par le frittage d'une composition de type pâte à fritter entre le composant électronique et son substrat. Ces pâtes à fritter sont souvent appelées aussi pâtes de brasage bien qu'elles ne soient pas formellement des pâtes de brasage.

Dans le domaine de la microélectronique, les composants électroniques de puissance, par exemple, sont fixés aux substrats par des brasures métalliques. La brasure, en plus de sa fonction d'attache mécanique, doit assurer une bonne conductivité thermique et électrique du composant.

Il est courant d'utiliser des pâtes et des crèmes métalliques ou encore des colles pour réaliser les brasures. Ces pâtes sont généralement constituées d'un mélange de solvants ou liants, fortement chargées en particules métalliques et formant un mélange pâteux de consistance plus ou moins molle.

Des particules métalliques micrométriques ou nanométriques, par exemple l'argent, ou d'oxalate métallique, par exemple l'oxalate d'argent, sont notamment utilisées pour la réalisation des brasures par procédé de frittage.

Dans ce cas, les particules métalliques ou les grains d'oxalate métallique peuvent être simplement dispersés dans un alcool. Cette composition est dénommée alors suspension de particules métalliques ou suspension d'oxalate métallique. Les particules métalliques ou les grains d'oxalate métallique peuvent être aussi conditionnées dans une préparation plus sophistiquée dénommée alors « pâte de brasage » qui apporte une meilleure tenue sous forme d'un gel et permet une utilisation et une conservation plus aisée.

La mise en œuvre et l'utilisation des suspensions et des pâtes présentent certains inconvénients. La viscosité élevée des pâtes peut rendre leur application par sérigraphie ou par dispense par microgoutte particulièrement difficile. Il est également courant que les suspensions bouchent les buses de dispense du produit. De plus, les pâtes et surtout les suspensions comprennent plusieurs phases et il peut se poser des problèmes de décantation dans leur contenant. L'application peut être aussi irrégulière aussi bien en densité qu'en épaisseur.

En utilisant ces pâtes et suspensions, il est nécessaire d'effectuer leur désolvatation avant d'effectuer le processus de frittage pour former la brasure. La désolvatation peut être réalisée en phase préparatoire immédiatement avant le processus de frittage. Cela est particulièrement difficile, car la désolvatation est réalisée sur le substrat donc une fois la pâte appliquée sur le substrat du composant électronique et cette étape s'additionne au processus de frittage du composant, ce qui rallonge tout le processus.

La désolvatation de la pâte primaire peut également s'effectuer en amont du processus de frittage. Les particules métalliques sont alors agglomérées sous forme de dôme et ne permettent pas d'assurer que le composant électronique porte uniformément sur les particules lors du frittage. Il en ressort que l'adhésion du composant électronique au substrat n'est pas optimale. De plus, le transport de la poudre métallique jusqu'au poste de frittage augmente les risques d'oxydation et de perte de cohérence des particules métalliques.

On peut se reporter à l'article hal-00729156 du 7/09/2012 publié par Amandine MASSON e al. On peut également se reporter aux documents US-4810672 et US-2007/0183920 qui décrivent des procédés de brasage classiques mettant en œuvre des compositions de brasage à base d'argent.

L'invention a pour but de remédier aux inconvénients précités en proposant une nouvelle méthodologie.

### EXPOSE DE L'INVENTION

L'invention concerne un procédé de prétraitement d'une composition de brasage comprenant des particules métalliques présentant une granulométrie de l'ordre du micromètre ou du nanomètre, un ou plusieurs liants et un ou plusieurs solvants, ledit procédé comprenant :
- une étape de désolvatation de la composition de brasage, de façon à obtenir une composition de brasage désolvatée,
- puis une étape de compactage de la composition de brasage désolvatée de façon à obtenir une préforme de particules métalliques ou d'oxalate métallique, ladite préforme étant apte à être utilisée pour le frittage d'un composant électronique, photonique, thermique ou mécanique sur un substrat.

Selon une caractéristique du procédé selon l'invention, la composition de brasage est représentée soit par une pâte à braser, soit par une suspension de grains métalliques ou d'oxalate métallique en suspension dans un solvant.

Avantageusement, la suspension de grains métalliques ou d'oxalate métallique est soumise à une étape de filtration préalable au travers d'une membrane de filtration disposée sur un dispositif d'aspiration.

Selon une autre caractéristique du procédé selon l'invention, l'étape de désolvatation peut être réalisée sous vide et à une température située entre 60°C et 100°C, préférentiellement à 80°C.

Selon encore une autre caractéristique du procédé selon l'invention, l'étape de compactage comprend les phases suivantes :
- remplissage d'une cavité avec la pâte à braser désolvatée ou avec la suspension désolvatée,
- compression de la pâte à braser désolvatée ou de la suspension dans la cavité entre un poinçon et un contre-poinçon agencés de manière à obtenir une préforme de particules métalliques présentant une forme, une épaisseur et une densité prédéterminées, et
- éjection de la préforme de particules métalliques hors de la cavité.

L'invention a également pour objet la préforme de particules métalliques obtenue selon le procédé.

Avantageusement, les particules métalliques de la préforme présentent une granulométrie de l'ordre du micromètre ou du nanomètre.

Avantageusement encore, les particules métalliques sont des grains d'argent ou des grains d'oxalate d'argent.

L'invention a également encore pour objet un dispositif de prétraitement d'une pâte à braser primaire ou d'une suspension comprenant des particules métalliques présentant une granulométrie de l'ordre du micromètre ou du nanomètre, un ou plusieurs liants et un ou plusieurs solvants de façon à obtenir une préforme de particules métalliques apte à être utilisée pour le frittage d'un composant électronique, photonique, thermique ou mécanique sur un substrat, caractérisé en ce que ledit dispositif comprend :
- un moyen de filtration apte à filtrer la suspension de grains d'argent ou d'oxalate d'argent de façon à obtenir une suspension filtrée,
- un moyen de désolvatation apte à désolvater la pâte à braser ou la suspension de façon à obtenir une pâte à braser désolvatée ou une suspension désolvatée,
- un moyen de compactage apte à compacter la pâte à braser désolvatée ou la suspension de façon à obtenir une préforme de particules métalliques, et
- un moyen de transfert de la suspension, de la pâte à braser désolvatée ou de la suspension et de la préforme de particules métalliques.

Selon une caractéristique du dispositif selon l'invention, le moyen de filtration comprend une membrane de filtration apte à recevoir la suspension et un moyen d'aspiration d'un ou plusieurs liants et d'un ou plusieurs solvants à travers ladite membrane de filtration.

Selon une autre caractéristique du dispositif selon l'invention, le moyen de désolvatation comprend une plaque chauffante apte à recevoir la pâte à braser ou la suspension filtrée et une cloche à vide escamotable.

Selon encore une caractéristique du dispositif selon l'invention, le moyen de compactage comprend une cavité apte à recevoir la pâte à braser désolvatée ou la suspension, un poinçon et un contre poinçon agencés de sorte à compacter la pâte à braser désolvatée ou la suspension dans la cavité de façon à obtenir une préforme de particules métalliques présentant une forme, une épaisseur et une densité prédéterminées.

Un avantage de la présente invention réside dans la réduction des temps de cycle nécessaires pour le frittage d'un composant électronique.

Un autre avantage de la présente invention réside dans l'obtention de préformes de particules métalliques comprenant peu voire pas d'autres composés.

Un autre avantage encore de la présente invention réside dans la production de préformes de particules métalliques présentant une bonne tenue mécanique.

Un autre avantage encore de la présente invention réside dans la fourniture de préformes de particules métalliques permettant de maîtriser parfaitement la hauteur de la brasure lors d'un frittage de composants électroniques.

Un autre avantage encore de la présente invention réside dans la fourniture de préformes de particules métalliques permettant de maîtriser parfaitement l'étendue de la zone de frittage du composant électronique.

Un autre avantage encore de la présente invention réside dans la fourniture de préformes de particules métalliques permettant de diminuer les problèmes de défaut de parallélisme entre le composant et son substrat.

### BREVE DESCRIPTION DES DESSINS

D'autres caractéristiques, détails et avantages détails seront mieux compris à la lecture du complément de description donné à titre indicatif en relation avec des dessins sur lesquels :
[FIG 1] représente un schéma du procédé de prétraitement selon l'invention,
[FIG 2] représente une vue du dispositif de prétraitement selon un mode de réalisation de l'invention,
[FIG 3] représente le moyen de filtration selon un mode de réalisation du dispositif selon l'invention,
[FIG 4] représente le moyen de désolvatation selon un mode de réalisation du dispositif selon l'invention, et
[FIG 5] représente le moyen de compactage selon un mode de réalisation du dispositif selon l'invention.

### DESCRIPTION DETAILLEE DE MODES DE REALISATION DE L'INVENTION

L'invention va maintenant être décrite avec d'avantage de détails. On décrira ci-après le brasage d'un composant électronique mais il va de soi que la préforme obtenue selon l'invention peut être utilisée pour souder n'importe quel composant par exemple du type photonique, thermique ou mécanique.

Comme indiqué précédemment, la composition de brasage utilisée dans l'invention est constituée soit par une pâte de brasage soit par une suspension des particules ou grains métalliques ou d'oxalate métallique dans un solvant. Ce solvant peut être par exemple de l'éthylène glycol.

Les pâtes à braser primaires contiennent essentiellement des particules métalliques ainsi que des éléments organiques qui doivent être retirés le plus possible de la pâte avant son utilisation pour le frittage de composants électroniques par exemple.

Les particules métalliques sont les éléments essentiels de la pâte. Elles vont permettre le frittage du composant électronique sur son substrat. Les particules métalliques des pâtes à braser présentent généralement une granulométrie de l'ordre du micromètre ou du nanomètre. Pour réaliser un bon frittage, les particules métalliques doivent posséder une bonne conductivité thermique et électrique. Ainsi, toutes les particules métalliques sont susceptibles d'être utilisées, en particulier l'argent.

Les composés organiques remplissent différentes fonctions : la fonction de liant pour donner une cohésion à la pâte et permettre son application par sérigraphie par exemple, la fonction de dispersant pour éviter que les particules métalliques frittent dans la pâte et la fonction de diluant pour fixer la viscosité de la pâte et une fonction anti-oxydante pour éviter l'oxydation des particules métalliques. Ces composés organiques de la pâte se retrouvent sous la forme de liants ou de solvants qu'il s'agit d'éliminer.

Ainsi, la pâte à braser comprend des particules métalliques présentant une granulométrie de l'ordre du micromètre ou du nanomètre, un ou plusieurs liants et un ou plusieurs solvants.

Les particules ou grains d'argent ou d'oxalate d'argent de la suspension sont particulièrement recommandées car elles possèdent une bonne conductivité thermique et électrique et elles sont peu sensibles à l'oxydation. Idéalement, des particules ou grains d'argent ou d'oxalate d'argent présentent une granulométrie de l'ordre du micromètre ou du nanomètre.

Pour réaliser le frittage d'un composant électronique par exemple, il est nécessaire de débarrasser préalablement le plus possible la suspension de son solvant ou la pâte à braser de ses composés organiques.

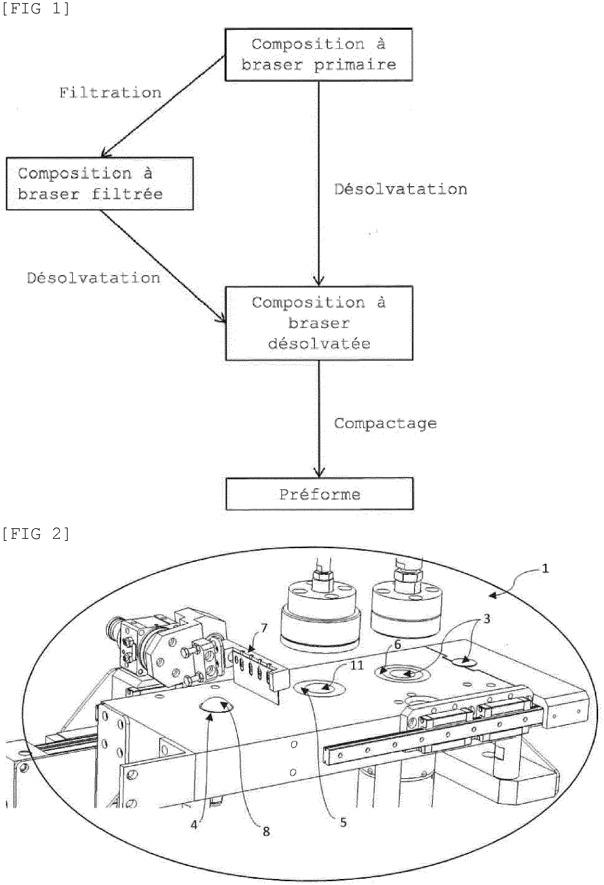

La figure 1 illustre les différentes étapes du procédé selon l'invention. L'étape initiale concerne uniquement la suspension et les deux étapes suivantes la suspension elle-même et une pâte à braser.

L'étape initiale consiste en une étape de filtration de la suspension de grains d'argent ou d'oxalate d'argent. Cette étape vise à filtrer rapidement une partie importante du solvant dans lequel les grains sont dispersés. Idéalement c'est une filtration par aspiration au travers d'une membrane de filtration disposée sur un dispositif d'aspiration. Il va de soi que tout autre système d'aspiration peut être mis en œuvre dans l'invention. Ainsi, les grains d'argent ou d'oxalate d'argent sont dispersés sur la membrane de filtration de façon manuelle ou à l'aide d'un moyen de dispersion automatique puis le moyen d'aspiration est activé.

La membrane de filtration est munie de pores présentant un diamètre adapté à la granulométrie des particules métalliques de la suspension. Cela permet de recueillir les grains métalliques de la suspension.

A l'issue de l'étape initiale, la pâte à braser et la suspension sont soumises à une étape de désolvatation puis une étape de compactage.

L'étape de désolvatation permet d'extraire de la pâte à braser les solvants et liants présent dans la pâte et les traces de solvants encore présentes dans la suspension. Ainsi, la pâte à braser et la suspension sont dispensées sur un plateau chauffant régulé en température. Idéalement, cette étape est réalisée à une température située entre 60°C et 100°C, préférentiellement 80°C. Avantageusement, l'étape de désolvatation peut être réalisée sous vide, ce qui permet d'améliorer et d'accélérer la désolvatation.

Selon un mode de réalisation de l'invention, le vide est réalisé autour de la pâte à braser ou de la suspension à l'aide d'une cloche à vide.

Cette étape permet d'obtenir une pâte à braser désolvatée comprenant une quantité réduite voire infime de liants et une suspension quasi exempte de solvant. On estime que la pâte et la suspension comprennent quasiment uniquement des particules d'argent.

A l'issue de la désolvatation, la pâte à braser désolvatée se présente sous la forme d'une masse malléable_et la suspension se présente sous forme de poudre. Il est nécessaire de leur donner une forme adéquate de façon à pouvoir l'utiliser pour le frittage d'un composant électronique.

Ainsi, on réalise une étape de compactage de la pâte à fritter désolvatée ou de la suspension de façon à obtenir une préforme de particules métalliques aptes à être utilisée pour le frittage d'un composant électronique sur un substrat.

Cette étape permet l'obtention d'une préforme de particules ou grains métalliques présentant une forme, une épaisseur et une densité voulue est adaptable en fonction de l'utilisation ultérieure. La préforme ainsi réalisée possède une certaine cohésion permettant son utilisation ultérieure sur le substrat recevant le composant électronique sans la dégrader.

Selon un mode de réalisation de l'invention, l'étape de compactage comprend les phases suivantes.

Une phase de remplissage d'une cavité avec la pâte à braser désolvatée ou la suspension. La cavité définit la forme globale de la préforme que l'on souhaite utiliser.

Une phase de compression de la pâte à braser désolvatée ou de la suspension dans la cavité entre un poinçon et un contre-poinçon agencés de manière à obtenir une préforme présentant une forme, une épaisseur et une densité prédéterminées. La position du poinçon est variable et/ou la pression de compactage est ajustable en fonction des besoins. Il est ainsi possible de maîtriser parfaitement la densité, la forme et l'épaisseur de la préforme obtenue et d'adapter la forme de la préforme aux dimensions du composant à assembler par frittage. De plus, la préforme obtenue comprend des faces supérieures et inférieures rigoureusement parallèles.

Une phase d'éjection de la préforme hors de la cavité. A ce stade du procédé selon l'invention, la préforme est apte à être utilisée pour le frittage d'un composant électronique et présente une tenue mécanique suffisante pour être manipulée manuellement ou automatiquement sans dégradation.

La préforme obtenue selon le procédé selon l'invention comprend des particules métalliques présentant une granulométrie de l'ordre du micromètre ou du nanomètre. Selon un mode de réalisation de l'invention, les particules métalliques sont des grains d'argent ou des grains d'oxalate d'argent.

L'invention concerne également un dispositif pour la mise en œuvre du procédé selon l'invention.

La figure 2 représente ainsi un dispositif 1 de prétraitement d'une pâte à braser ou d'une suspension comprenant des particules métalliques présentant une granulométrie de l'ordre du micromètre ou du nanomètre, un ou plusieurs liants et un ou plusieurs solvants.

Le dispositif 1 selon l'invention permet d'obtenir une préforme 3 de particules métalliques apte à être utilisée pour le frittage d'un composant électronique sur un substrat. Le dispositif 1 est constitué d'un moyen de filtration 4, d'un moyen de désolvatation 5, d'un moyen de compactage 6 et d'un moyen de transfert 7. Le dispositif 1 peut également comprendre un moyen de dispense de la pâte à braser primaire ou de la suspension 2 ainsi qu'un moyen de mise à disposition de la préforme 3 de particules métalliques. Il va de soi que la quantité de pâte ou de suspension à déposer sur le moyen de filtration 4 est définie au préalable selon les besoins et les dimensions finales que l'on recherche.

Sur la figure 2, on distingue le moyen de transfert 7 permettant le transfert de la pâte à braser filtrée ou de la suspension 8 depuis le moyen de filtration 4 vers le moyen de désolvatation 5. Le moyen de transfert 7 permet également le transfert de la pâte à braser désolvatée ou de la suspension 11 depuis le moyen de désolvatation 5 vers le moyen de compactage 6 décrit ci-après.

Selon un mode de réalisation du dispositif de l'invention, le moyen de transfert 7 est un racleur constitué d'une fine lame montée sur ressort et se déplaçant entre les différents moyens 4, 5 et 6 du dispositif de prétraitement 1.

Il va de soi qu'au début du cycle, le moyen de transfert 7 est positionné en avant du moyen de filtration 4 pour conduire la pâte ou la suspension et la préforme de place en place.

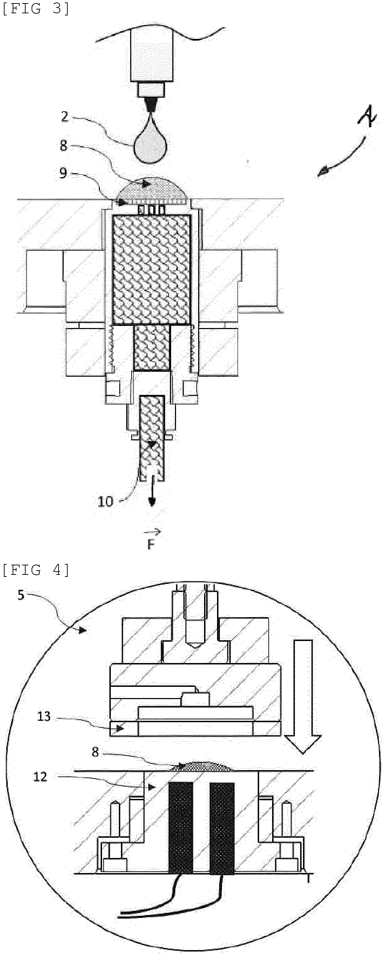

La figure 3 représente le moyen de filtration 4 selon un mode de réalisation du dispositif 1 selon l'invention. Le moyen de filtration 4 est apte à recevoir et à filtrer la suspension 2 de façon à obtenir une suspension filtrée 8. Selon un mode de réalisation du dispositif selon l'invention représenté sur la figure 3, le moyen de filtration 4 comprend une membrane de filtration 9 apte à recevoir la suspension 2 et un moyen d'aspiration 10 d'un ou plusieurs solvants à travers la membrane de filtration 9. Avantageusement, la membrane de filtration 9 présente des pores de diamètre adapté à la granulométrie des particules métalliques de la suspension 2.

La membrane de filtration 9 permet de recevoir et de filtrer la suspension 2. Sa conception est telle qu'elle empêche les particules métalliques de la suspension 2 de la traverser. A contrario, la membrane de filtration 9 laisse traverser le solvant par aspiration suivant la flèche F à travers elle au moyen du moyen d'aspiration 10.

La figure 4 représente le moyen de désolvatation 5 selon un mode de réalisation du dispositif selon l'invention. Le moyen de désolvatation 5 est apte à recevoir et désolvater la pâte à braser filtrée ou la suspension 8 de façon à obtenir une pâte à braser désolvatée ou une suspension 11. Le moyen de désolvatation 5 permet d'enlever le ou les solvants présents dans la pâte à braser filtrée ou dans la suspension 8.

Selon un mode de réalisation du dispositif 1 selon l'invention représenté sur la figure 4, le moyen de désolvatation comprend une plaque chauffante 12 apte à recevoir la pâte à braser filtrée ou la suspension 8 et une cloche à vide escamotable 13.

La plaque chauffante 12 reçoit et chauffe la pâte à braser filtrée ou la suspension 8 par transfert de chaleur. Ainsi, le ou les solvants présents dans la pâte à braser filtrée ou dans la suspension 8 s'évaporent en fonction de la température. Pour accélérer le processus de désolvatation, il est préférable d'utiliser une cloche à vide 13 permettant de réaliser la désolvatation sous vide de façon à accélérer le processus de désolvatation de la pâte à braser filtrée ou de la suspension 8.

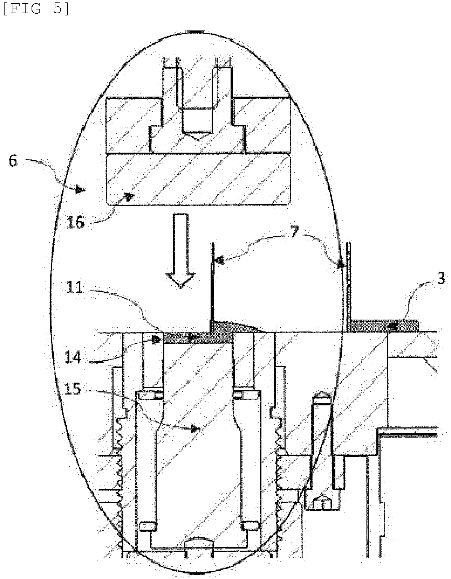

La figure 5 représente le moyen de compactage 6 selon un mode de réalisation du dispositif selon l'invention. Le moyen de compactage 6 est apte à recevoir et à compacter la pâte à braser désolvatée ou la suspension 11 de façon à obtenir une préforme 3 de particules métalliques. Le moyen de compactage 6 permet, par l'application de forces de compression sur la pâte à braser désolvatée ou la suspension 11, de former la préforme 3 tout en maîtrisant sa forme, sa densité et son épaisseur.

Ainsi, la pâte à braser comprend des particules métalliques présentant une granulométrie de l'ordre du micromètre ou du nanomètre, un ou plusieurs liants et un ou plusieurs solvants.

On a représenté sur la figure 5 le moyen de compactage 6 qui comprend une cavité 14, un poinçon 15 et un contre-poinçon 16. La cavité 14 est apte à recevoir la pâte à braser désolvatée ou la suspension 11 et sa forme détermine la forme finale de la préforme 3. Sur la figure, on voit que la cavité 14 a été remplie et le surplus de composition est évacué par le racleur 7.

Le poinçon 15 et le contre-poinçon 16 sont agencés de sorte à compacter la pâte à braser désolvatée ou la suspension 11 dans la cavité de façon à obtenir une préforme de particules métalliques présentant une forme, une épaisseur et une densité prédéterminées. Les forces exercées par le poinçon 15 et le contre-poinçon 16 déterminent la densité et l'épaisseur de la préforme 3.

Enfin, après compression, le moyen de transfert 7 permet l'éjection de la préforme 3 hors du moyen de compactage 6 ainsi que son transfert vers une zone de préhension. La préforme 3 de particules métalliques est alors apte à être utilisée pour le frittage d'un composant électronique.

On voit tout l'intérêt de l'invention en permettant de réaliser une brasure à l'aide à l'aide d'une préforme renfermant quasiment 100% de grains métalliques. Cette manière de faire évite tous les traitements connus de la composition de brasage pratiqués en présence du composant électronique. D'autre part, la préforme permet de réaliser des brasures en continu en limitant le temps d'intervention en présence du composant électronique.

Le procédé selon l'invention permet une grande souplesse d'utilisation dans le processus de frittage, car il est possible de fabriquer rapidement des préformes dont les dimensions sont adaptées à celles des composants à fritter, puis de réaliser directement le brasage. On voit que ce frittage peut être réalisé en continu en associant le dispositif selon l'invention à une station de frittage.

## Revendications

1. Procédé de prétraitement d'une composition de brasage comprenant des particules métalliques présentant une granulométrie de l'ordre du micromètre ou du nanomètre, un ou plusieurs liants et un ou plusieurs solvants, ledit procédé comprenant :
- une étape de désolvatation de la composition de brasage (8), de façon à obtenir une composition de brasage désolvatée (11),
- puis une étape de compactage de la composition de brasage désolvatée (11) de façon à obtenir une préforme (3) de particules métalliques, ladite préforme étant apte à être utilisée pour le frittage d'un composant électronique, photonique, thermique ou mécanique sur un substrat.

2. Procédé de préformage selon la revendication 1, **caractérisé en ce que** la composition de brasage (11) est représentée soit par une pâte à braser, soit par une suspension de grains métalliques ou d'oxalate métallique en suspension dans un solvant.

3. Procédé de préformage selon la revendication 2, **caractérisé en ce que** la suspension de grains métalliques ou d'oxalate métallique est soumise à une étape de filtration préalable au travers d'une membrane de filtration (9) disposée sur un dispositif d'aspiration (10).

4. Procédé selon l'une quelconque des revendications précédentes, **caractérisé en ce que** l'étape de désolvatation est réalisée sous vide et à une température située entre 60°C et 100°C, préférentiellement à 80°C.

5. Procédé selon l'une quelconque des revendications précédentes, **caractérisé en ce que** l'étape de compactage comprend les phases suivantes :
- remplissage d'une cavité (14) avec la pâte à braser désolvatée ou avec la suspension (11),
- compression de la pâte à braser désolvatée ou de la suspension (11) dans la cavité (14) entre un poinçon (15) et un contre-poinçon (16) agencés de manière à obtenir une préforme (3) de particules métalliques présentant une forme, une épaisseur et une densité prédéterminées, et
- éjection de la préforme (3) de particules métalliques hors de la cavité.

6. Préforme (3) de particules métalliques obtenues selon le procédé selon l'une quelconque des revendications précédentes.

7. Préforme (3) selon la revendication 6, **caractérisée en ce que** les particules métalliques présentent une granulométrie de l'ordre du micromètre ou du nanomètre.

8. Préforme (3) selon la revendication 6 ou 7, **caractérisée en ce que** les particules métalliques sont des grains d'argent ou des grains d'oxalate d'argent.

9. Dispositif de prétraitement (1) d'une pâte à braser primaire ou d'une suspension (2) comprenant des particules métalliques présentant une granulométrie de l'ordre du micromètre ou du nanomètre, un ou plusieurs liants et un ou plusieurs solvants de façon à obtenir une préforme (3) de particules métalliques apte à être utilisée pour le frittage d'un composant électronique sur un substrat, **caractérisé en ce que** ledit dispositif comprend :
- un moyen de filtration (4) apte à filtrer la suspension de grains d'argent ou d'oxalate d'argent (2) de façon à obtenir une suspension filtrée (8),
- un moyen de désolvatation (5) apte à désolvater la pâte à braser ou la suspension (8) de façon à obtenir une pâte à braser désolvatée ou une suspension (11),
- un moyen de compactage (6) apte à compacter la pâte à braser désolvatée ou la suspension (11) de façon à obtenir une préforme (3) de particules métalliques, et
- un moyen de transfert (7) de la suspension (8), de la pâte à braser désolvatée ou de la suspension (11) et de la préforme (3) de particules métalliques.

10. Dispositif (1) selon la revendication 9, **caractérisé en ce que** le moyen de filtration (4) comprend une membrane de filtration (9) apte à recevoir la suspension (2) et un moyen d'aspiration (10) d'un ou plusieurs liants et d'un ou plusieurs solvants à travers ladite membrane de filtration (9).

11. Dispositif (1) selon la revendication 10, **caractérisé en ce que** la membrane de filtration (9) présente des pores de diamètre adapté à la granulométrie des particules métalliques de la suspension.

12. Dispositif (1) selon l'une quelconque des revendications 9 à 11, **caractérisé en ce que** le moyen de désolvatation (5) comprend une plaque chauffante (12) apte à recevoir la pâte à braser ou la suspension filtrée (8) et une cloche à vide (13) escamotable.

13. Dispositif (1) selon l'une quelconque des revendications 9 à 12, **caractérisé en ce que** le moyen de compactage (6) comprend une cavité (14) apte à recevoir la pâte à braser désolvatée ou la suspension (11), un poinçon (15) et un contre poinçon (16) agencés de sorte à compacter la pâte à braser désolvatée ou la suspension (11) dans la cavité (14) de façon à obtenir une préforme (3) de particules métalliques présentant une forme, une épaisseur et une densité prédéterminées.
